# EUROPEAN PATENT APPLICATION

(11) **EP 4 579 861 A1**
(43) Date of publication of application: **02.07.2025**
(21) Application number: 23921769.8
(22) Date of filing: 15.02.2023
(51) Int. Cl.: H01M 10/0583, H01M 10/0525

(54) **ELECTRODE ASSEMBLY, BATTERY CELL, BATTERY, AND ELECTRICAL DEVICE**

(71) Applicant: Contemporary Amperex Technology (Hong Kong) Limited, Central (HK)
(72) Inventor: LI, Quanguo, Ningde, Fujian 352100 (CN)
(74) Representative: Ran, Handong
(86) International application number: PCT/CN2023/076241
(87) International publication number: WO 2024/168606

(57) **Abstract**

The embodiments of the present application provide an electrode assembly, a battery cell, a battery, and an electrical device. The electrode assembly comprises: a first pole piece, the first pole piece comprising a plurality of first layered segments and at least one first bent segment; wherein the first bent segment comprises a plurality of first notches arranged along a second direction, the second direction being the direction in which the first bent segment extends; the plurality of first notches comprise first edge notches disposed on two ends of the first pole piece along the second direction, and a first middle notch located in a middle area of the first pole piece; and the length of the first edge notches along the second direction is greater than the length of the first middle notch along the second direction. The electrode assembly, battery cell, battery, and electrical device of the embodiments of the present application improve the machining efficiency and quality pass rate of the electrode assembly.

## Description

### TECHNICAL FIELD

This application relates to the field of battery technology, and in particular, to an electrode assembly, a battery cell, a battery, and an electrical device.

### BACKGROUND

With the continuous advancement of battery technology, various new energy industries that use a battery as an energy storage device have developed rapidly. In the development of battery technology, safety and processing efficiency of batteries are also critical in addition to battery performance. Therefore, how to improve the processing efficiency and safety of batteries is a pressing technical challenge in the development of battery technology.

### SUMMARY

Some embodiments of this application provide an electrode assembly, a battery cell, a battery, and an electrical device to improve the processing efficiency and yield rate of the electrode assembly.

According to a first aspect, an electrode assembly is provided. The electrode assembly includes: a first electrode plate. The first electrode plate includes a plurality of first stacked sections and at least one first bent section. The plurality of first stacked sections are stacked along a first direction. The first bent section is configured to connect two first stacked sections. The first electrode plate is configured to bend at the first bent section. The first direction is perpendicular to the first stacked sections. The first bent section includes a plurality of first nicks arranged along a second direction. The second direction is an extension direction of the first bent section. The plurality of first nicks include first edge nicks located at two ends of the first electrode plate along the second direction and a first middle nick located in a middle region of the first electrode plate. A length of each first edge nick along the second direction is greater than a length of the first middle nick along the second direction.

Therefore, in the electrode assembly according to an embodiment of this application, on the one hand, the first bent section can be positioned through the plurality of first nicks, and the offset of the first electrode plate at the bend can be reduced. On the other hand, the plurality of first nicks can also reduce the difficulty of bending, reduce the resistance during bending, and in turn, improve the processing efficiency of the electrode assembly. In addition, when the first bent section is being bent, the resistance at the edges of the first electrode plate at two ends along the second direction is greater than the resistance in the middle of the first electrode plate. Moreover, the creases at the edges of the first electrode plate fluctuate more violently. Therefore, the length of the first edge nick along the second direction is set to be greater than the length of the first middle nick along the second direction, thereby reducing the resistance at the edges of the first electrode plate to a greater extent, reducing fluctuations, further reducing the probability of offsetting of the first electrode plate during bending, and in turn, improving the processing efficiency and yield rate of the electrode assembly.

In some embodiments, along the first direction, the plurality of first nicks are located in the middle of the first bent section. In this way, the positioning is more accurate when the first electrode plate is bent along the plurality of first nicks, and the offset of the electrode plate is minimized, thereby improving the processing efficiency and yield rate of the electrode assembly.

In some embodiments, the length of the first edge nick along the second direction is greater than or equal to three times the length of the first middle nick along the second direction; and/or the length of the first edge nick along the second direction is less than or equal to five times the length of the first middle nick along the second direction.

If the length of the first edge nick along the second direction is less than three times the length of the first middle nick along the second direction, the first edge nick is undersized and unable to effectively reduce the resistance at the edge region of the first electrode plate during the bending, thereby failing to effectively improve the processing efficiency of the electrode assembly. If the length of the first edge nick along the second direction is greater than five times the length of the first middle nick along the second direction, the first edge nick is oversized, and reduces the structural strength of the first electrode plate, thereby impairing the yield rate of the electrode assembly.

In some embodiments, the plurality of first nicks include a plurality of first middle nicks, and lengths of the plurality of first middle nicks along the second direction are equal, and/or intervals between the plurality of first middle nicks along the second direction are equal.

In this way, the lengths of the plurality of first middle nicks are equal, thereby reducing the number of times the dimensional precision of different first middle nicks needs to be adjusted, and in turn, reducing the difficulty of processing. When the intervals between the plurality of first middle nicks are equal, the distribution of the first middle nicks along the second direction is relatively uniform, thereby making the middle region of the first electrode plate stressed uniformly along the second direction and easily bendable, reducing the difficulty of processing the electrode assembly, and in turn, improving the processing efficiency and yield rate of the electrode assembly.

In some embodiments, one end of the first electrode plate along the second direction includes a tab. A length of a first edge nick close to the tab along the second direction is less than a length of a first edge nick away from the tab along the second direction.

Considering that the thickness of the edge, close to the tab, of the first electrode plate is usually less than the thickness of the edge, away from the tab, of the first electrode plate during processing, the length of the first edge nick close to the tab along the second direction is set to be less than the length of the first edge nick away from the tab along the second direction, so that the first edge nick away from the tab can more effectively reduce the bending resistance of the first electrode plate at the edge away from the tab, thereby reducing the processing difficulty of the electrode assembly, and in turn, improving the processing efficiency and yield rate of the electrode assembly.

In some embodiments, a ratio of a distance between the first edge nick and an end of the corresponding first electrode plate along the second direction to a length of the first electrode plate along the second direction falls within a range of [0.008, 0.02].

If the ratio is excessively small, the distance between the first edge nick and the edge of the corresponding first electrode plate along the second direction will be excessively small. Consequently, on the one hand, the strength is insufficient at a region between the first edge nick and the edge of the first electrode plate, thereby reducing the structural strength of the first electrode plate and impairing the processing efficiency and performance of the electrode assembly. On the other hand, a higher processing precision is required for the corresponding first edge nick, thereby increasing the processing difficulty and being detrimental to the processing efficiency of the electrode assembly. Therefore, this ratio needs to avoid being excessively small. On the contrary, if the ratio is excessively large, the distance between the first edge nick and the edge of the corresponding first electrode plate along the second direction will be excessively large. Consequently, the first edge nick is less effective in reducing the bending resistance of the edge of the first electrode plate, and is unable to effectively reduce the bending difficulty of the electrode assembly, thereby being detrimental to the processing efficiency of the electrode assembly. Therefore, this ratio needs to avoid being excessively large.

In some embodiments, a distance between the first edge nick and an adjacent first middle nick falls within a range of [1 mm, 10 mm]. If the distance is excessively large, that is, if the distance between the first edge nick and the provided first middle nick is relatively large, then the region between the first edge nick and the adjacent first middle nick is subjected to still a large resistance during bending, thereby failing to effectively reduce the resistance during bending of the electrode assembly, and being detrimental to the processing efficiency of the electrode assembly. On the contrary, if the distance is excessively small, that is, if the distance between the first edge nick and the provided first middle nick is relatively small, then the structural strength of the region between the first edge nick and the first middle nick is excessively low, thereby impairing the structural strength of the first electrode plate, and also impairing the structural strength of the electrode assembly. In addition, a higher processing precision is required for the first edge nick and the adjacent first middle nick, thereby increasing the processing difficulty of the electrode assembly, and impairing the processing efficiency of the electrode assembly.

In some embodiments, the first nick is a through-hole; or the first nick is a groove. If the first nick is a through-hole, the through-hole makes the processing convenient, and greatly reduces the resistance during bending, thereby improving the processing efficiency of the electrode assembly. If the first nick is a groove, the groove reduces the resistance during bending, and reduces the loss of structural strength caused to the first electrode plate of the electrode assembly.

In some embodiments, the first electrode plate includes a plurality of first bent sections that are bent in different bending directions. The bending in different directions forms a stacked-type electrode assembly, and makes the structure simple and easy to implement.

In some embodiments, the plurality of first bent sections include two first bent sections that are bent in opposite bending directions. The dimensions of the first nicks on the two first bent sections along the bending direction are equal. In this way, the plurality of first bent sections bent along different bending directions are stressed more uniformly, the formed electrode assembly is more uniform, the offset between different first stacked sections is reduced, and the processing efficiency and yield rate of the electrode assembly are improved.

In some embodiments, the first electrode plate includes a plurality of first bent sections. The plurality of first bent sections are bent in the same bending direction. Among the plurality of first bent sections, a dimension of a first nick on a first bent section close to a center of the electrode assembly along a bending direction is smaller than a dimension of a first nick on a first bent section far from the center of the electrode assembly along the bending direction.

The arc length of the first bent section inside the electrode assembly along the bending direction is relatively small, that is, the bending radius is relatively small, while the arc length of the first bent section outside the electrode assembly along the bending direction is relatively large, that is, the bending radius is relatively large. In other words, the arc length of the first bent section along the bending direction gradually increases from the inside to the outside of the electrode assembly. Therefore, correspondingly, among the plurality of first bent sections, the dimension of the first nick on the first bent section close to the center of the electrode assembly along the bending direction is set to be smaller than the dimension of the first nick on the first bent section far from the center of the electrode assembly along the bending direction. In this way, the dimension of the first nick on the first bent section with a relatively small arc length is also relatively small, and the dimension of the first nick on the first bent section with a relatively large arc length is also relatively large, thereby not only facilitating processing, but also increasing the structural strength of the electrode assembly and alleviating the problem of excessively low strength at a local region of the electrode assembly on the other hand.

In some embodiments, the electrode assembly further includes: a plurality of second electrode plates of an opposite polarity to the first electrode plate. The plurality of second electrode plates and the plurality of first stacked sections are alternately stacked along the first direction. In this way, during bending of the electrode assembly, the second electrode plate does not need to be bent, thereby reducing the number of layers to be bent and reducing the difficulty of bending the electrode assembly.

In some embodiments, along a third direction, the first bent section corresponds to at least one second electrode plate. Along the first direction, a dimension of each of the first nicks is less than or equal to a dimension of at least one corresponding second electrode plate. The third direction is perpendicular to the first direction and the second direction. In this way, the dimension of the first nick along the first direction is set to be less than or equal to the dimension of at least one corresponding second electrode plate along the first direction, so that the second electrode plate is prevented from being exposed from the first nick, thereby reducing the precipitation of an active material caused by the excessive size of the first nick, and reducing the adverse effect on the performance of the electrode assembly.

In some embodiments, the electrode assembly further includes: a second electrode plate of an opposite polarity to the first electrode plate. The first electrode plate and the second electrode plate are wound around a winding axis, thereby reducing the need for repeated cutting of the second electrode plate before winding, and in turn, speeding up the processing of the electrode assembly.

In some embodiments, the second electrode plate includes a plurality of second stacked sections and at least one second bent section. The second bent section is configured to connect two adjacent second stacked sections. The second bent section includes a plurality of second nicks arranged along a second direction. The plurality of second nicks include second edge nicks located at two ends of the second electrode plate along the second direction and a second middle nick located in a middle region of the first electrode plate. A length of each second edge nick along the second direction is greater than a length of the second middle nick along the second direction.

Therefore, the second bent section includes a plurality of second nicks arranged along the second direction. On the one hand, the second bent section can be positioned through the plurality of second nicks, thereby reducing the offset of the second electrode plate at the bend, and in turn, reducing the offset between different electrode plates of the electrode assembly. On the other hand, the plurality of second nicks can also reduce the difficulty of bending, reduce the resistance during bending, and in turn, improve the processing efficiency of the electrode assembly. In addition, when the second bent section is being bent, the resistance at the edges of the second electrode plate at two ends along the second direction is greater than the resistance in the middle of the second electrode plate. Moreover, the creases at the edges of the second electrode plate fluctuate more violently. Therefore, the length of the second edge nick along the second direction is set to be greater than the length of the second middle nick along the second direction, thereby reducing the resistance at the edges of the second electrode plate to a greater extent, reducing fluctuations, further reducing the probability of offsetting of the second electrode plate during bending, and in turn, reducing the probability of failure of the electrode assembly, and improving the processing efficiency and yield rate of the electrode assembly.

In some embodiments, among the plurality of first bent sections and the at least one second bent section, a dimension of a nick on a bent section close to a center of the electrode assembly along a bending direction is smaller than a dimension of a nick on a bent section far from the center of the electrode assembly along the bending direction.

The arc lengths of the first bent section of the first electrode plate and the second bent section of the second electrode plate gradually increase along an outward radial direction from inside of the electrode assembly, that is, the bending radius gradually increases. Therefore, the dimensions of the first nick and the second nick along the bending direction are also set to gradually increase along the outward radial direction from inside of the electrode assembly accordingly. In this way, the nick on a bent section with a smaller arc length is smaller in size, and the nick on a bent section with a larger arc length is larger in size, thereby not only facilitating processing, but also increasing the structural strength of the electrode assembly and alleviating the problem of excessively low strength at a local region of the electrode assembly.

In some embodiments, the second electrode plate is a positive electrode plate, thereby reducing the adverse effect on the performance of the electrode assembly.

In some embodiments, the positive electrode plate includes a positive active material layer. A material in the positive active material layer includes at least one of: a Prussian blue sodium-ion positive electrode material, a layered oxide sodium-ion positive electrode material, or a polyanionic sodium electrode material. The electrode assembly and battery cell formed by using such a positive active material layer are more resistant to high temperature and reduce the probability of explosion of the battery cell at high temperature.

In some embodiments, the first electrode plate is a negative electrode plate, thereby reducing the adverse effect on the performance of the electrode assembly.

In some embodiments, the negative electrode plate includes a negative current collector. A surface of the negative current collector is uncoated with a negative active material. In this way, the overall thickness of the negative electrode plate is reduced, and the resultant electrode assembly is lighter and smaller in volume; or, the thickness of the positive electrode plate is increased in a case that the overall thickness of the negative electrode plate is reduced. For example, the thickness of the positive active material layer on the positive electrode plate is increased, thereby increasing the energy density of the battery cell containing the electrode assembly.

According to a second aspect, a battery cell is provided. The battery cell includes the electrode assembly according to the first aspect.

According to a third aspect, a battery is provided. The battery includes a plurality of battery cells, and each battery cell includes the electrode assembly according to the first aspect.

According to a fourth aspect, an electrical device is provided. The electrical device includes a battery. The battery includes the electrode assembly according to the first aspect. The battery is configured to provide electrical energy for the electrical device.

In some embodiments, the electrical device is a vehicle, watercraft, or spacecraft.

### BRIEF DESCRIPTION OF DRAWINGS

FIG. 1 is a schematic structural diagram of a vehicle according to an embodiment of this application;
FIG. 2 is a schematic exploded view of a battery according to an embodiment of this application;
FIG. 3 is a schematic structural diagram of a plurality of battery cells included in a battery according to an embodiment of this application;
FIG. 4 is a schematic structural diagram of a battery cell according to an embodiment of this application;
FIG. 5 is a schematic exploded view of a battery cell according to an embodiment of this application;
FIG. 6 is a cross-sectional schematic view of an electrode assembly according to an embodiment of this application;
FIG. 7 is a cross-sectional schematic view of another electrode assembly according to an embodiment of this application;
FIG. 8 is a cross-sectional schematic view of still another electrode assembly according to an embodiment of this application;
FIG. 9 is a schematic structural diagram of a spread-out first electrode plate according to an embodiment of this application;
FIG. 10 is a cross-sectional schematic view at a local region of a first electrode plate according to an embodiment of this application; and
FIG. 11 is a cross-sectional schematic view at a local region of a second electrode plate according to an embodiment of this application.

The drawings are not drawn to scale.

### DETAILED DESCRIPTION

The following gives a more detailed description of implementations of this application with reference to drawings and embodiments. The detailed description of the following embodiments and drawings are intended to describe the principles of this application illustratively, but not to limit the scope of this application. Therefore, this application is not limited to the described embodiments.

In the description of this application, unless otherwise specified, "a plurality of" means at least two in number; the terms such as "up", "down", "left", "right", "in", and "out" indicating a direction or a position relationship are merely intended for ease or brevity of description of this application, but do not indicate or imply that the mentioned device or component is necessarily located in the specified direction and position or constructed or operated in the specified direction and position. Therefore, such terms are not to be understood as a limitation on this application. In addition, the terms "first", "second", "third", and so on are merely used for descriptive purposes, but not construed as indicating or implying relative importance. "Perpendicular" does not means exact perpendicularity, but means perpendicularity falling within an error tolerance range. "Parallel" does not mean exact parallelism, but means parallelism falling within an error tolerance range.

The directional terms appearing in the following description indicate the directions shown in the drawings, but are not intended to limit specific structures in this application. In the description of this application, unless otherwise expressly specified, the terms "mount", "concatenate", and "connect" are understood in a broad sense. For example, a "connection" may be a fixed connection, a detachable connection, or an integrated connection, and may be a direct connection or an indirect connection implemented through an intermediary. A person of ordinary skill in the art can understand the specific meanings of the terms in this application according to specific situations.

In some embodiments of this application, the same reference numeral denotes the same component. For brevity, detailed descriptions of the same component are omitted in a different embodiment. Understandably, dimensions such as thickness, length, and width of various components in some embodiments of this application shown in the drawings, and dimensions such as overall thickness, length, and width of an integrated device are merely illustrative descriptions, but do not constitute any limitation on this application.

In this application, a battery cell may include a lithium-ion secondary battery, a lithium-ion primary battery, a lithium-sulfur battery, a sodium-lithium-ion battery, a sodium-ion battery, a magnesium-ion battery, or the like, without being limited in embodiments of this application. The battery cell may be in various shapes such as cylindrical, flat, cuboidal or other shapes. The shape of the battery cell is not limited herein. Depending on the form of packaging, the battery cell is typically classed into three types: cylindrical battery cell, prismatic battery cell, and pouch-type battery cell, without being limited in embodiments of this application.

The battery mentioned in embodiments of this application means a unitary physical module that includes one or more battery cells to provide a higher voltage and a higher capacity. For example, the battery mentioned in this application may include a battery module, a battery pack, or the like. A battery typically includes a box configured to package one or more battery cells. The box can reduce the adverse effect of a liquid or other foreign matters on the battery cells during charge or discharge.

Generally, a battery cell includes an electrode assembly. The electrode assembly includes a positive electrode, a negative electrode, and a separation piece. During charge and discharge of a battery cell, active ions (such as lithium ions) are shuttled between the positive electrode and the negative electrode by intercalation and deintercalation. Disposed between the positive electrode and the negative electrode, the separation piece serves to prevent a short circuit between the positive electrode and the negative electrode and allow passage of the active ions.

In some embodiments, the positive electrode may be a positive electrode plate. The positive electrode plate may include a positive current collector and a positive active material disposed on at least one surface of the positive current collector.

As an example, the positive current collector includes two surfaces opposite to each other in a thickness direction of the current collector. The positive active material is disposed on any one or both of the two opposite surfaces of the positive current collector.

In some embodiments, the negative electrode may be a negative electrode plate. The negative electrode plate may include a negative current collector and a negative active material disposed on at least one surface of the negative current collector.

For example, the negative current collector includes two surfaces opposite to each other in a thickness direction thereof. The negative active material is disposed on either or both of the two opposite surfaces of the negative current collector.

In some embodiments, the negative electrode may be a foamed metal. The foamed metal may be foamed nickel, foamed copper, foamed aluminum, foamed alloy, foamed carbon, or the like. When the foamed metal is used as the negative electrode plate, a negative active material may be disposed on the surface of the foamed metal or not.

In some embodiments, the electrode assembly further includes a separation piece. The separation piece is disposed between the positive electrode and the negative electrode.

In some embodiments, the separation piece is a film-like separator. The type of the separator is not particularly limited in this application, and may be any well-known porous separator that is highly stable both chemically and mechanically.

In some embodiments, the separation piece is a solid electrolyte. The solid-state electrolyte is disposed between the positive electrode and the negative electrode, and serves functions of transmitting ions and isolating the positive electrode from the negative electrode at the same time.

In some embodiments, the battery cell further includes an electrolyte. The electrolyte serves to conduct ions between the positive electrode and the negative electrode. The type of the electrolyte is not particularly limited in this application, and may be selected as required. The electrolyte may be in a liquid state, gel state, or solid state.

In some embodiments, the electrode assembly is a jelly-roll structure. The positive electrode plate and the negative electrode plate are wound into a jelly-roll structure.

In some embodiments, the electrode assembly is a stacked structure. In some embodiments, a tab is disposed on the electrode assembly. The tab can lead a current from the electrode assembly. The tab includes a positive tab and a negative tab.

During the processing of the electrode assembly, when at least one electrode plate in an electrode assembly such as a jelly-roll electrode assembly needs to be sent, the problem of nonuniform stress is very prone occur during bending of a corner region of the jelly-roll electrode assembly, thereby leading to misalignment between different layers of electrode plates. The misaligned electrode plates are prone to the problem of precipitation of an active material, thereby being detrimental to the processing efficiency and yield rate of the electrode assembly.

Therefore, an embodiment of this application provides an electrode assembly. The electrode assembly includes a first electrode plate. The first electrode plate includes a plurality of first stacked sections and at least one bent section. The plurality of first stacked sections are stacked along a first direction. The first direction is perpendicular to the first stacked sections. The first bent section is configured to connect two first stacked sections. The first electrode plate can bend at the first bent section. The first bent section includes a plurality of first nicks arranged along a second direction. The second direction is an extension direction of the first bent section. On the one hand, the first bent section can be positioned through the plurality of first nicks, and the offset of the first electrode plate at the bend can be reduced. On the other hand, the plurality of first nicks can also reduce the difficulty of bending, reduce the resistance during bending, and in turn, improve the processing efficiency of the electrode assembly.

In addition, the plurality of first nicks include first edge nicks located at two ends of the first electrode plate along the second direction and a first middle nick located in a middle region of the first electrode plate. The length of each first edge nick along the second direction is greater than the length of the first middle nick along the second direction. When the first bent section is being bent, the resistance at the edges of the first electrode plate at two ends along the second direction is greater than the resistance in the middle of the first electrode plate. Moreover, the creases at the edges of the first electrode plate fluctuate more violently. Therefore, the length of the first edge nick along the second direction is set to be greater than the length of the first middle nick along the second direction, thereby reducing the resistance at the edges of the first electrode plate to a greater extent, reducing fluctuations, further reducing the probability of offsetting of the first electrode plate during bending, reducing the probability of precipitation of an active material, and improving the processing efficiency and yield rate of the electrode assembly.

The technical solutions described in this embodiment of this application are applicable to various electrical devices that use a battery.

The electrical device may be a vehicle, a mobile phone, a portable device, a notebook computer, a ship, a spacecraft, an electric toy, a power tool, or the like. The vehicle may be an oil-fueled vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The electrical device is not particularly limited in this embodiment of this application.

For ease of description in the following embodiments, a vehicle is used as an example of the electrical device.

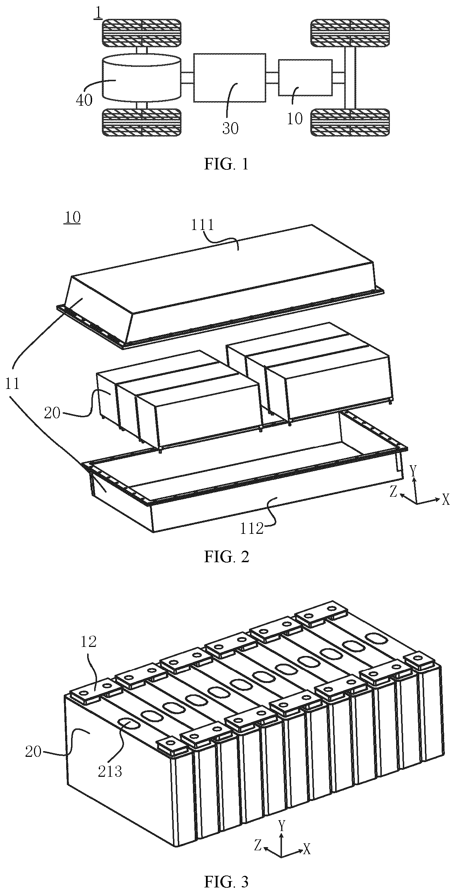

For example, as shown in FIG. 1, which is a schematic structural diagram of a vehicle 1 according to an embodiment of this application, the vehicle 1 may be an oil-fueled vehicle, a natural gas vehicle, or a new energy vehicle. The new energy vehicle may be a battery electric vehicle, a hybrid electric vehicle, a range-extended electric vehicle, or the like. A motor 40, a controller 30, and a battery 10 may be disposed inside the vehicle 1. The controller 30 is configured to control the battery 10 to supply power to the motor 40. For example, the battery 10 may be disposed at the bottom, front, or rear of the vehicle 1. The battery 10 may be configured to supply power to the vehicle 1. For example, the battery 10 may serve as an operating power supply of the vehicle 1 to power a circuit system of the vehicle 1. For example, the battery may be configured to meet operating power usage requirements of the vehicle 1 that is being started or navigated or running. In another embodiment of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power usage requirements, the battery may include a plurality of battery cells. The plurality of battery cells may be connected in series, parallel, or series-and-parallel pattern. The series-and-parallel pattern means a combination of series connection and parallel connection. The battery may also be referred to as a battery pack. Optionally, the plurality of battery cells may be connected in series, parallel, or series-and-parallel pattern to form a battery module, and then a plurality of battery modules may be connected in series, parallel, or series-and-parallel pattern to form the battery. In other words, the plurality of battery cells may directly form the battery, or form the battery modules that are then used to form the battery.

For example, FIG. 2 is a schematic structural diagram of a battery 10 according to an embodiment of this application. The battery 10 may include a plurality of battery cells 20. FIG. 3 is a schematic diagram of a plurality of battery cells 20 included in the battery 10. As shown in FIG. 2 and FIG. 3, the battery 10 may further include a box 11. The interior of the box 11 is a hollow structure. A plurality of battery cells 20 are accommodated in the box 11. FIG. 2 shows a possible implementation of the box 11 according to this embodiment of this application. As shown in FIG. 2, the box 11 may include two parts, herein referred to as a first part 111 and a second part 112 respectively. The first part 111 and the second part 112 are snap-fitted together. The shapes of the first part 111 and the second part 112 may depend on the shape of the combined battery module 200. An opening is created on at least one of the first part 111 or the second part 112. For example, as shown in FIG. 2, the first part 111 and the second part 112 each may be a hollow cuboid, and each may include one opened surface. The opening of the first part 111 is opposite to the opening of the second part 112. The first part 111 and the second part 112 are snap-fitted to each other to form a box 11 that includes a closed cavity.

For another example, different from what is shown in FIG. 2, of the first part 111 and the second part 112, only one is a hollow cuboid with an opening, and the other assumes a plate shape to cover the opening. For example, the second part 112 is a hollow cuboid with one opened surface, and the first part 111 assumes a plate shape. In this case, the first part 111 fits and covers the opening of the second part 112 to form a box 11 with a closed cavity. The cavity may be configured to accommodate a plurality of battery cells 20. The plurality of battery cells 20 are combined and connected in parallel, series, or series-and-parallel pattern, and then placed into the box 11 that is formed by snap-fitting the first part 111 and the second part 112.

Optionally, the battery 10 may further include other structures, details of which are omitted here. For example, as shown in FIG. 2 and FIG. 3, the battery 10 may further include a busbar component 12. The busbar component 12 is configured to implement electrical connection between the plurality of battery cells 20, such as parallel connection, series connection, or series-parallel connection. Specifically, the busbar component 12 may implement the electrical connection between the battery cells 20 by connecting electrode terminals 214 of the battery cells 20. Further, the busbar component 12 may be fixed to the electrode terminals 214 of the battery cells 20 by welding. Electrical energy of the plurality of battery cells 20 may be further led out by a conductive mechanism running through the box 11.

Depending on the required power, the number of battery cells 20 in a battery 10 may be set to any value. A plurality of battery cells 20 may be connected in series, parallel, or series-and-parallel pattern to achieve a relatively high capacity or power. Each battery 10 may include a relatively large number of battery cells 20. Therefore, in order to facilitate mounting, the battery cells 20 may be arranged in groups. Each group of battery cells 20 forms a battery module. The number of battery cells 20 included in the battery module is not limited, and may be set as required.

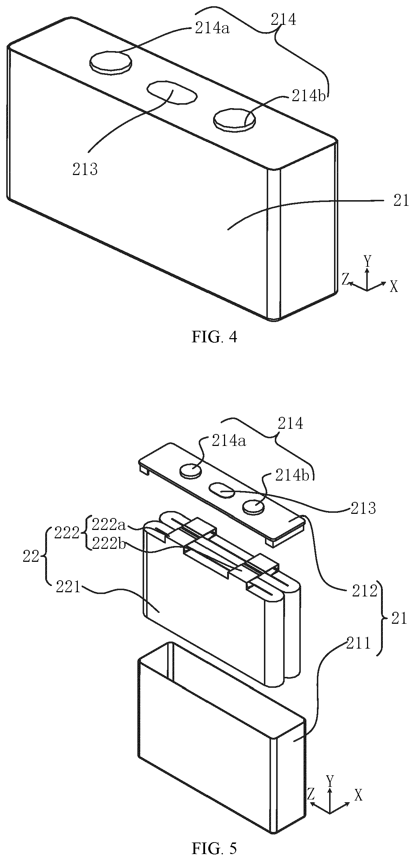

FIG. 4 is a schematic structural diagram of a battery cell 20 according to an embodiment of this application. FIG. 5 is a schematic exploded view for a local region of a battery cell 20 according to an embodiment of this application. For example, the battery cell 20 shown in FIG. 5 may be any one battery cell 20 shown in FIG. 2 to FIG. 4. As shown in FIG. 4 and FIG. 5, the battery cell 20 according to this embodiment of this application may include a shell 21. Specifically, the shell 21 may include: a housing 211, where the housing 211 is a hollow structure provided with at least one opening; a cover plate 212, configured to fit and cover the opening of the housing; and an electrode assembly 22, accommodated in the shell 21.

Understandably, the housing 211 in this embodiment of this application is a component configured to accommodate the electrode assembly 22. The housing 211 may be a hollow structure opened at one or more ends. For example, if the housing 211 is a hollow structure opened at one end, one cover plate 212 may be disposed. If the housing 211 is a hollow structure opened at two opposite ends, two cover plates 212 may be disposed. The two cover plates 212 fit and cover the openings at the two ends of the housing 211 respectively.

The housing 211 may be in various shapes such as a cylinder, cuboid, or another polyhedron. As an example, as shown in FIG. 4 and FIG. 5, in an embodiment of this application, the housing 211 is a cuboidal structure, and the housing 211 is a hollow structure that opens at one end.

Understandably, the cover plate 212 in this embodiment of this application is configured to fit and cover the opening of the housing 211 to isolate the internal environment of the battery cell 20 from the external environment. The shape of the cover plate 212 may be adapted to the shape of the housing 211. As shown in FIG. 4 and FIG. 5, the housing 211 is a cuboidal structure, and the cover plate 212 is a rectangular plate-shaped structure adapted to the housing 211.

In an embodiment of this application, the housing 211 may be made of a variety of materials such as copper, iron, aluminum, steel, or aluminum alloy. The cover plate 212 may be made of a variety of materials such as copper, iron, aluminum, steel, or an aluminum alloy. Optionally, the material of the cover plate 212 may be the same as or different from the material of the housing 211.

Understandably, the battery cell 20 further includes an electrode terminal 214. The electrode terminal 214 in an embodiment of this application is configured to be electrically connected to the electrode assembly 22 in the battery cell 20 to output electrical energy of the battery cell 20. As shown in FIG. 4 to FIG. 5, the battery cell 20 may include at least two electrode terminals 214. The at least two electrode terminals 214 may include at least one positive electrode terminal 214a and at least one negative electrode terminal 214b. The positive electrode terminal 214a is configured to be electrically connected to a positive tab 222a of the electrode assembly 22, and the negative electrode terminal 214b is configured to be electrically connected to a negative tab 222b of the electrode assembly 22. The positive electrode terminal 214a may be connected to the positive tab 222a directly or indirectly, and the negative electrode terminal 214b may be connected to the negative tab 222b directly or indirectly. For example, the positive electrode terminal 214a may be electrically connected to the positive tab 222a by one connection component, and the negative electrode terminal 214b may be electrically connected to the negative tab 222b by one connection component.

In the battery cell 20, the electrode assembly 22 is a component in which electrochemical reactions occur in the battery cell 20. The number of electrode assemblies 22 in a housing 211 may be one or more, depending on practical needs. For example, as shown in FIG. 4 and FIG. 5, 2 electrode assemblies 22 are disposed in a battery cell 20. The electrode assembly 22 may be cylindrical, cuboidal, or the like. If the electrode assembly 22 is cylindrical, the housing 211 may be cylindrical accordingly. If the electrode assembly 22 is cuboidal, the housing 211 may be cuboidal accordingly.

Understandably, as shown in FIG. 4 and FIG. 5, an electrode assembly 22 may include a tab 222 and an electrode body 221. The tab 222 of the electrode assembly 22 may include a positive tab 222a and a negative tab 222b. The positive tab 222a may be formed by stacking parts uncoated with a positive active material layer on a positive electrode plate. The negative tab 222b may be formed by stacking parts uncoated with a negative active material layer on a negative electrode plate. The electrode body 221 may be formed by stacking or winding the positive electrode plate and the negative electrode plate together.

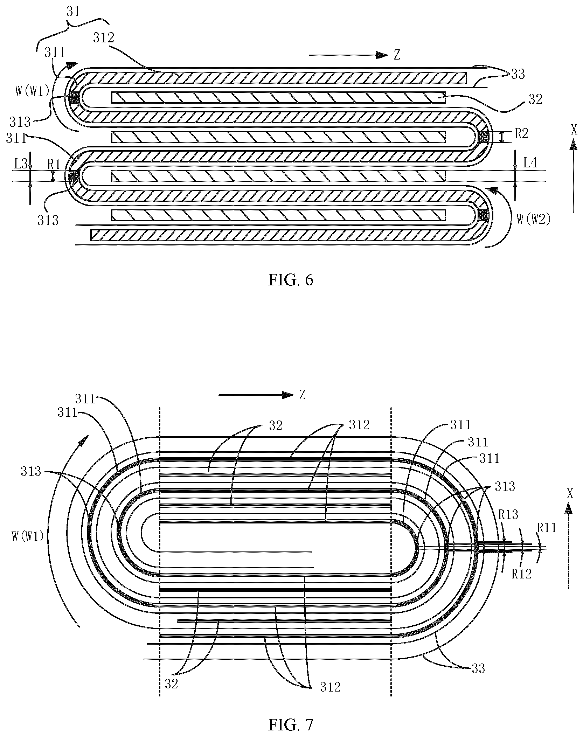

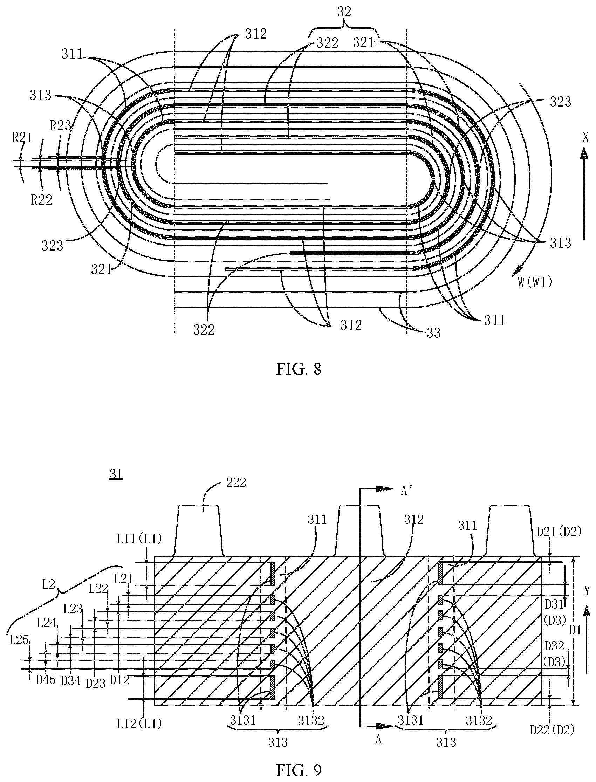

FIG. 6 to FIG. 8 show cross-sectional schematic views of electrode assemblies 22 according to different embodiments of this application respectively. The electrode assemblies 22 shown in FIG. 6 to FIG. 8 assume different structures, but the cross-sections shown are cross-sections in the same direction of the electrode assemblies 22. For example, the cross-sections in FIG. 6 to FIG. 8 may be parallel to an end surface in which the tab 222 shown in FIG. 5 is located. FIG. 9 shows a partial expanded view of a first electrode plate 31 included in the electrode assembly 22 according to an embodiment of this application. For example, the first electrode plate 31 shown in FIG. 9 may be a partial schematic diagram of any one electrode plate of the electrode assembly 22 shown in FIG. 6 to FIG. 8.

As shown in FIG. 6 to FIG. 9, the electrode assembly 22 according to an embodiment of this application includes a first electrode plate 31. The first electrode plate 31 includes a plurality of first stacked sections 312 and at least one first bent section 311. The plurality of first stacked sections 312 are stacked along a first direction X. The first bent section 311 is configured to connect two first stacked sections 312. The first electrode plate 31 is configured to bend at the first bent section 311. The first direction X is perpendicular to the first stacked sections 312. The first bent section 311 includes a plurality of first nicks 313 arranged along a second direction Y. The second direction Y is an extension direction of the first bent section 311. The plurality of first nicks 313 include first edge nicks 3131 located at two ends of the first electrode plate 31 along the second direction Y and a first middle nick 3132 located in a middle region of the first electrode plate 31. A length L1 of each first edge nick 3131 along the second direction Y is greater than a length L2 of the first middle nick 3132 along the second direction Y.

Understandably, the first electrode plate 31 in an embodiment of this application may be any one electrode plate of the electrode assembly 22, for example, a positive electrode plate or a negative electrode plate of the electrode assembly 22. For ease of description, FIG. 6 to FIG. 8 show an example in which the first electrode plate 31 is a negative electrode plate, but embodiments of this application are not limited to the example.

As shown in FIG. 6 to FIG. 8, for the electrode assembly 22, the first stacked section 312 in an embodiment of this application is a relatively flat region of the first electrode plate 31 of the electrode assembly 22, and the first bent section 311 is a bent region of the first electrode plate 31 of the electrode assembly 22. Specifically, for the spread-out first electrode plate 31 shown in FIG. 9, the first stacked section 312 and the first bent section 311 are connected to each other and spaced apart. To be specific, two ends of each first stacked section 312 are connected to two first bent sections 311 respectively, and two ends of two first bent sections 311 are connected to two first stacked sections 312 respectively. During assembling of the electrode assembly 22, the first electrode plate 31 is bent at the first bent section 311, and a plurality of first stacked sections 312 are stacked along the first direction X, thereby forming the electrode assembly 22. The first direction is a direction perpendicular to the first stacked section 312.

Understandably, the first bent section 311 in an embodiment of this application includes a plurality of first nicks 313 arranged along the second direction Y. As shown in FIG. 9, the second direction Y is an extension direction of the first bent section 311. In other words, the second direction Y is perpendicular to an edge on which the tab 222 of the first electrode plate 31 is located, that is, perpendicular to an end surface in which the tab 222 of the electrode assembly 22 is located. Put differently, the second direction Y is a width direction of the first electrode plate 31. In addition, the second direction Y is perpendicular to the first direction X.

In an embodiment of this application, the plurality of first nicks 313 include first edge nicks 3131 located at two ends of the first electrode plate 31 along the second direction Y. Specifically, the second direction Y in an embodiment of this application includes a vertical upward direction and a vertical downward direction, as shown in FIG. 9. The two ends of the first electrode plate 31 along the second direction Y include an upper edge and a lower edge of the first electrode plate 31. Therefore, the plurality of first nicks 313 include at least one first edge nick 3131 located on the upper edge and/or at least one first edge nick 3131 located on the lower edge.

In addition, if the plurality of first nicks 313 include a plurality of first edge nicks 3131, the length L1 of the first edge nicks 3131 along the second direction Y in an embodiment of this application may mean an average, minimum, or maximum value of the lengths of the plurality of first edge nicks 3131 along the second direction Y. For example, as shown in FIG. 9, in an example in which the plurality of first nicks 313 include two first edge nicks 3131, the length of the upper first edge nick 3131 along the second direction Y is L11, and the length of the lower first edge nick 3131 along the second direction Y is L12, and therefore, the length L1 of the first edge nick 3131 along the second direction Y in this embodiment of this application may be a minimum value among L11 and L12. However, embodiments of this application are not limited to the example.

Similar to the first edge nick 3131, the plurality of first nicks 313 in an embodiment of this application may include at least one first middle nick 3132 located in the middle region of the first electrode plate 31. If the plurality of first nicks 313 include a plurality of first middle nicks 3132, the length L2 of the first middle nicks 3132 along the second direction Y in an embodiment of this application may mean an average value, a minimum value, or a maximum value of the lengths of the plurality of first middle nicks 3132 along the second direction Y. For example, as shown in FIG. 9, in an example in which the plurality of first nicks 313 include five first middle nicks 3132, the lengths of the five first middle nicks 3132 along the second direction Y are L21, L22, L23, L24, and L25, respectively, from top to bottom. Therefore, the length L2 of the first middle nick 3132 along the second direction Y in this embodiment of this application may be the maximum value among L21 to L25. However, embodiments of this application are not limited to the example.

Therefore, in this embodiment of this application, the first bent section 311 includes a plurality of first nicks 313 arranged along the second direction Y. On the one hand, the first bent section 311 can be positioned through the plurality of first nicks 313, thereby reducing the offset of the first electrode plate 31 at the bend, and in turn, reducing the offset between different electrode plates of the electrode assembly 22. On the other hand, the plurality of first nicks 313 can also reduce the difficulty of bending, reduce the resistance during bending, and in turn, improve the processing efficiency of the electrode assembly 22. In addition, when the first bent section 311 is being bent, the resistance at the edges of the first electrode plate 31 at two ends along the second direction Y is greater than the resistance in the middle of the first electrode plate 31. Moreover, the creases at the edges of the first electrode plate 31 fluctuate more violently. Therefore, the length L1 of the first edge nick 3131 along the second direction Y is set to be greater than the length L2 of the first middle nick 3132 along the second direction Y, thereby reducing the resistance at the edges of the first electrode plate 31 to a greater extent, reducing fluctuations, further reducing the probability of offsetting of the first electrode plate 31 during bending, reducing the probability of precipitation of an active material or failure of the electrode assembly 22, and improving the processing efficiency and yield rate of the electrode assembly 22.

In an embodiment of this application, along the first direction X, the plurality of first nicks 313 are located in the middle of the first bent section 311. Specifically, as shown in FIG. 6 to FIG. 9, the plurality of first nicks 313 are located in the middle of the first bent section 311 along the first direction X; or, in other words, the plurality of first nicks 313 are located in the middle of the first bent section 311 along the bending direction W. In this way, the positioning is more accurate when the first electrode plate 31 is bent along the plurality of first nicks 313, and the offset of the electrode plate is minimized, thereby improving the processing efficiency and yield rate of the electrode assembly 22.

Understandably, the bending direction W in this embodiment of this application may include a clockwise direction W1 and a counterclockwise direction W2. As shown in FIG. 6 to FIG. 9, the first electrode plate 31 may include a plurality of first bent sections 311 bent in the same direction or different directions. For example, for different types of electrode assemblies 22, the first electrode plate 31 may include first bent sections 311 bent in the same direction, or, the first electrode plate 31 may include first bent sections 311 bent in different directions, without being limited herein.

Understandably, the length L1 of the first edge nick 3131 along the second direction Y in this embodiment of this application may be flexibly set according to practical needs. In addition, if the first bent section 311 includes a plurality of first edge nicks 3131, the lengths of the plurality of first edge nicks 313 along the second direction Y may be equal or unequal, and the positions of the plurality of first edge nicks 313 along the second direction Y may also be flexibly set according to practical needs. Similarly, the length L2 of the first middle nick 3132 along the second direction Y in this embodiment of this application may also be flexibly set according to practical needs. In addition, if the first bent section 311 includes a plurality of first middle nicks 3132, the lengths of the plurality of first middle nicks 3132 along the second direction Y may be equal or unequal, and the positions of the plurality of first middle nicks 3132 along the second direction Y may also be flexibly set according to practical needs. The following gives a more detailed description with examples with reference to some specific embodiments.

Optionally, in an embodiment, the length L1 of the first edge nick 3131 along the second direction Y is greater than or equal to three times the length L2 of the first middle nick 3132 along the second direction Y; and/or the length L1 of the first edge nick 3131 along the second direction Y is less than or equal to five times the length L2 of the first middle nick 3132 along the second direction Y. Specifically, if the length L1 of the first edge nick 3131 along the second direction Y is less than three times the length L2 of the first middle nick 3132 along the second direction Y, the first edge nick 3131 is undersized and unable to effectively reduce the resistance at the edge region of the first electrode plate 31 during the bending, thereby failing to effectively improve the processing efficiency of the electrode assembly 22. If the length L1 of the first edge nick 3131 along the second direction Y is greater than five times the length L2 of the first middle nick 3132 along the second direction Y, the first edge nick 3131 is oversized, and reduces the structural strength of the first electrode plate 31, thereby impairing the yield rate of the electrode assembly 22.

Optionally, in an embodiment, in a case that the plurality of first nicks 313 include a plurality of first middle nicks 3132, lengths of the plurality of first middle nicks 3132 along the second direction Y are equal, and/or intervals between the plurality of first middle nicks 3132 along the second direction Y are equal. Specifically, as shown in FIG. 6 to FIG. 9, in an example in which the plurality of first nicks 313 include five first middle nicks 3132, the lengths of the five first middle nicks 3132 along the second direction Y are L21, L22, L23, L24, and L25, respectively, from top to bottom. Therefore, the five first middle nicks 3132 may be set to satisfy the condition that the lengths L21, L22, L23, L24, and L25 are all equal. In addition, the lengths of the intervals between the five first middle nicks 3132 along the second direction Y are D12, D23, D34, and D45, respectively, from top to bottom. Therefore, the five first middle nicks 3132 may be set to satisfy the condition that the lengths L12, D23, D34, and D45 are all equal.

In this way, the lengths of the plurality of first middle nicks 3132 along the second direction Y are set to be equal, thereby reducing the number of times the dimensional precision of different first middle nicks 3132 needs to be adjusted, reducing the difficulty of processing. The intervals between the plurality of first middle nicks 3132 along the second direction Y are set to be equal, that is, the first middle nicks 3132 are distributed uniformly along the second direction Y, thereby making the middle region of the first electrode plate 31 stressed uniformly along the second direction Y and easily bendable, reducing the difficulty of processing the electrode assembly 22, and in turn, improving the processing efficiency and yield rate of the electrode assembly 22.

Optionally, in an embodiment, one end of the first electrode plate 31 along the second direction Y includes a tab 222. A length L11 of a first edge nick 3131 close to the tab 222 along the second direction Y is less than a length L12 of a first edge nick 3131 away from the tab 222 along the second direction Y. Specifically, as shown in FIG. 6 to FIG. 9, the length of the first edge nick 3131 close to the tab 222 along the second direction Y is L11, and the length of the first edge nick 3131 away from the tab 222 along the second direction Y is L12.

Optionally, in an embodiment, a ratio of a distance D2 between the first edge nick 3131 and an end of the corresponding first electrode plate 31 along the second direction Y to a length D1 of the first electrode plate 31 along the second direction Y falls within a range of [0.008, 0.02]. This value range is obtained through a large number of experimental verifications. Specifically, as shown in FIG. 6 to FIG. 9, if the plurality of first nicks 313 include a plurality of first edge nicks 3131, the distance D2 between the first edge nick 3131 and an end of the corresponding first electrode plate 31 along the second direction Y in an embodiment of this application may mean an average, minimum, or maximum value of the distances from the plurality of first edge nicks 3131 to an end of the corresponding first electrode plate 31 along the second direction Y. For example, as shown in FIG. 9, in an example in which the plurality of first nicks 313 include two first edge nicks 3131, the distance from the upper first edge nick 3131 to the upper edge of the first electrode plate 31 along the second direction Y is D21, and the distance from the lower first edge nick 3131 to the lower edge of the first electrode plate 31 along the second direction Y is D22. Therefore, the distance D2 between the first edge nick 3131 and an end of the corresponding first electrode plate 31 along the second direction Y in this embodiment of this application may be a minimum value among D21 and D22. However, embodiments of this application are not limited to the example.

If the ratio of the distance D2 to the length D1 is excessively small, for example, less than 0.008, the distance D2 between the first edge nick 3131 and the edge of the corresponding first electrode plate 31 along the second direction Y will be excessively small. Consequently, on the one hand, the strength is insufficient at a region between the first edge nick 3131 and the edge of the first electrode plate 31, thereby reducing the structural strength of the first electrode plate 31 and impairing the processing efficiency and performance of the electrode assembly 22. On the other hand, a higher processing precision is required for the corresponding first edge nick 3131, thereby increasing the processing difficulty and being detrimental to the processing efficiency of the electrode assembly 22. Therefore, the ratio of the distance D2 to the length D1 needs to avoid being excessively small.

On the contrary, if the ratio of the distance D2 to the length D1 is excessively large, for example, greater than 0.02, the distance D2 between the first edge nick 3131 and the edge of the corresponding first electrode plate 31 along the second direction Y will be excessively large. Consequently, the first edge nick 3131 is less effective in reducing the bending resistance of the edge of the first electrode plate 31, and is unable to effectively reduce the bending difficulty of the electrode assembly 22, thereby being detrimental to the processing efficiency of the electrode assembly 22. Therefore, the ratio of the distance D2 to the length D1 needs to avoid being excessively large.

Optionally, the ratio of the distance D2 to the length D1 may be set according to practical needs. For example, the ratio of the distance D2 to the length D1 may be set to 0.008, 0.009, 0.01, 0.011, 0.012, 0.013, 0.014, 0.015, 0.016, 0.017, 0.018, 0.019, or 0.02.

In addition, the distance D2 between the first edge nick 3131 and an end of the corresponding first electrode plate 31 along the second direction Y in an embodiment of this application may also be set according to practical needs. For example, the distance D2 may be set to fall within a range of [1 mm, 30 mm]. This value range is obtained through a large number of experimental verifications so that the distance D2 is neither excessively large nor excessively small. For another example, the distance D2 may be set to 1 mm, 3 mm, 5 mm, 8 mm, 10 mm, 13 mm, 15 mm, 18 mm, 20 mm, 23 mm, 25 mm, 28 mm, or 30 mm.

The length D1 of the first electrode plate 31 along the second direction Y in an embodiment of this application may also be set according to practical needs. For example, the length D1 may be set to fall within a range of [50 mm, 1200 mm]. This value range is obtained through a large number of experimental verifications. For another example, the length D1 may be set to 50 mm, 100 mm, 150 mm, 200 mm, 250 mm, 300 mm, 350 mm, 400 mm, 450 mm, 500 mm, 550 mm, 600 mm, 650 mm, 700 mm, 750 mm, 800 mm, 850 mm, 900 mm, 950 mm, 1000 mm, 1100 mm, or 1200 mm.

Optionally, in an embodiment, a distance D3 between the first edge nick 3131 and an adjacent first middle nick 3132 falls within a range of [1 mm, 10 mm]. This value range is obtained through a large number of experimental verifications. Specifically, as shown in FIG. 6 to FIG. 9, if the plurality of first nicks 313 include a plurality of first edge nicks 3131, the distance D3 between the first edge nick 3131 and an adjacent first middle nick 3132 in an embodiment of this application may mean a maximum, minimum, or average value of the distances from each first edge nick 3131 among the plurality of first edge nicks 3131 to the corresponding first middle nick 3132. For example, as shown in FIG. 9, in an example in which the plurality of first nicks 313 include two first edge nicks 3131, the distance between the upper first edge nick 3131 and one adjacent first middle nick 3132 along the second direction Y is D31, and the distance between the lower first edge nick 3131 and one adjacent first middle nick 3132 along the second direction Y is D32. Therefore, the distance D3 between the first edge nick 3131 and an adjacent first middle nick 3132 in an embodiment of this application may be a minimum value among D31 and D32. However, embodiments of this application are not limited to the example.

If the distance D3 is excessively large, that is, if the distance between the first edge nick 3131 and the provided first middle nick 3132 is relatively large, then the region between the first edge nick 3131 and the adjacent first middle nick 3132 is subjected to still a large resistance during bending, thereby failing to effectively reduce the resistance during bending of the electrode assembly 22, and being detrimental to the processing efficiency of the electrode assembly 22. Therefore, the distance D3 needs to avoid being excessively large. On the contrary, if the distance D3 is excessively small, that is, if the distance between the first edge nick 3131 and the provided first middle nick 3132 is relatively small, then the structural strength of the region between the first edge nick 3131 and the provided first middle nick 3132 is excessively low, thereby impairing the structural strength of the first electrode plate 31, and also impairing the structural strength of the electrode assembly 22. In addition, a higher processing precision is required for the first edge nick 3131 and the adjacent first middle nick 3132, thereby increasing the processing difficulty of the electrode assembly 22, and impairing the processing efficiency of the electrode assembly 22. Therefore, the distance D3 also needs to avoid being excessively small.

Optionally, the specific value of the distance D3 may be set according to practical needs. For example, the distance D3 may be specifically set to 1 mm, 1.5 mm, 2 mm, 2.5 mm, 3 mm, 3.5 mm, 4 mm, 4.5 mm, 5 mm, 5.5 mm, 6 mm, 6.5 mm, 7 mm, 7.5 mm, 8 mm, 8.5 mm, 9 mm, 9.5 mm, or 10 mm.

In an embodiment of this application, the structure of the first nick 313 may be flexibly set according to practical needs. For example, as shown in FIG. 6 to FIG. 9, the first nick 313 is a through-hole, thereby not only making the processing convenient, but also greatly reducing the resistance during bending and improving the processing efficiency of the electrode assembly 22.

For another example, the first nick 313 is a groove. In this way, the first nick can reduce the resistance during bending, and reduce the loss of structural strength caused to the first electrode plate 31 of the electrode assembly 22.

Optionally, if the first nick 313 is a groove, the groove may be formed in a variety of ways. For example, the groove may be formed by locally thinning the first electrode plate 31. In this case, the thickness of a bottom wall of the groove is less than a thickness of a remaining region of the first electrode plate 31 other than the groove. For another example, the opening direction of the groove may be flexibly set according to practical needs. For example, the groove may be opened toward the center of the electrode assembly 22, or opened in a direction directed away from the center of the electrode assembly 22, without being limited herein.

Optionally, the first edge nick 3131 and the first middle nick 3132 included in the first nicks 313 in an embodiment of this application may be of the same type or different types. For example, the first edge nick 3131 is a through-hole, and the first middle nick 3132 is a groove; or, both the first edge nick 3131 and the first middle nick 3132 are through-holes, without being limited herein.

The foregoing is a description of the dimensions of the first nick 313 in some embodiments of this application with reference to drawings. The following will describe in detail the first nicks 313 of different types of electrode assemblies 22 with reference to drawings.

In an embodiment of this application, the first electrode plate 31 includes a plurality of first bent sections 311 that are bent in different bending directions W. Specifically, the first electrode plate 31 may be formed by a bending method shown in FIG. 6. In this case, the first electrode plate 31 includes a plurality of first bent sections 311 bent in different bending directions W. For example, the first electrode plate 31 includes a first bent section 311 bent along a clockwise direction W1, and also includes a first bent section 311 bent along a counterclockwise direction W2. By bending in different directions, a stacked-type electrode assembly 22 is formed, and the structure is simple and easy to implement.

Optionally, the plurality of first bent sections 311 include two first bent sections 311 that are bent in opposite bending directions W. Dimensions of the first nicks 313 on the two first bent sections 311 along the bending directions are equal. Specifically, as shown in FIG. 6, for example, for any one first bent section 311 bent along the clockwise direction W1 among a plurality of first bent sections 311, the dimension of the first bent section 311 along the clockwise direction W1 is R1. For another example, for any one first bent section 311 bent along the counterclockwise direction W2 among a plurality of first bent sections 311, the dimension of the first bent section 311 along the counterclockwise direction W2 is R2. Therefore, the dimension R1 may be set to be equal to R2. In this way, the plurality of first bent sections 311 bent along different bending directions W are stressed more uniformly, the formed electrode assembly 22 is more uniform, the offset between different first stacked sections 312 is reduced, and the processing efficiency and yield rate of the electrode assembly 22 are improved.

In an embodiment of this application, the first electrode plate 31 includes a plurality of first bent sections 311, and the bending directions W of the plurality of first bent sections 311 are the same. In other words, the first electrode plate 31 is always bent along the same bending direction W. For example, as shown in FIG. 7 or FIG. 8, the plurality of first bent sections 311 included in the first electrode plate 31 are all bent along the clockwise direction W1, thereby forming a jelly-roll electrode assembly 22.

Optionally, among the plurality of first bent sections 311, the dimension of a first nick 313 on a first bent section 311 close to the center of the electrode assembly 22 along the bending direction W is smaller than the dimension of a first nick 313 on a first bent section 311 far from the center of the electrode assembly 22 along the bending direction W. For example, as shown in FIG. 7, using the right half of the first electrode plate 31 as an example, the first electrode plate 31 includes three first bent sections 311 sequentially in a direction directed away from the electrode assembly 22 from the center of the electrode assembly 22. Each first bent section 311 is provided with a first nick 313. In a direction from the inner first bent section 311 to the outer first bent section 311, the dimensions of the first nicks 313 on the three bent sections 311 along the bending direction W are R11, R12, and R13, respectively. The dimensions of the first nicks 313 on the three first bent sections 311 along the bending direction W are set to satisfy: R11 < R12 < R13.

The arc length of the first bent section 311 inside the electrode assembly 22 along the bending direction W is relatively small, that is, the bending radius is relatively small, while the arc length of the first bent section 311 outside the electrode assembly 22 along the bending direction W is relatively large, that is, the bending radius is relatively large. In other words, the arc length of the first bent section 311 along the bending direction W gradually increases from the inside to the outside of the electrode assembly 22. Therefore, correspondingly, among the plurality of first bent sections 311, the dimension of the first nick 313 on the first bent section 311 close to the center of the electrode assembly 22 along the bending direction W is set to be smaller than the dimension of the first nick 313 on the first bent section 311 far from the center of the electrode assembly 22 along the bending direction W. In this way, the dimension of the first nick 313 on the first bent section 311 with a relatively small arc length is also relatively small, and the dimension of the first nick 313 on the first bent section 311 with a relatively large arc length is also relatively large, thereby not only facilitating processing, but also increasing the structural strength of the electrode assembly 22 and alleviating the problem of excessively low strength at a local region of the electrode assembly 22.

In an embodiment of this application, the electrode assembly 22 further includes: a plurality of second electrode plates 32 of an opposite polarity to the first electrode plate 31. The plurality of second electrode plates 32 and the plurality of first stacked sections 312 are alternately stacked along the first direction X. Specifically, as shown in FIG. 6 or FIG. 7, although the processing method of the first electrode plate 31 varies, the electrode assembly 22 may include a plurality of second electrode plates 32. The plurality of second electrode plates 32 may be stacked and arranged between the plurality of first stacked sections 312. In this way, during bending of the electrode assembly 22, the second electrode plate 32 does not need to be bent, thereby reducing the number of layers to be bent and reducing the difficulty of bending the electrode assembly 22.

Optionally, along a third direction Z, the first bent section 311 corresponds to at least one second electrode plate 32. Along the first direction X, a dimension L3 of each of the first nicks 313 is less than or equal to a dimension L4 of at least one corresponding second electrode plate 32. The third direction Z is perpendicular to the first direction X and the second direction Y. For example, for the first nick 313 on any one first bent section 311 in FIG. 6, the dimension of the first nick 313 along the first direction X is L3. Corresponding to the first bent section 311, a second electrode plate 32 is disposed along the third direction Z, and the dimension of the second electrode plate 32 along the first direction X is L4. Therefore, the dimension L3 is less than or equal to L4. Alternatively, if a plurality of layers of second electrode plates 32 are disposed corresponding to the first bent section 311 along the third direction Z, then the dimension L3 is less than or equal to the total dimension of the plurality of layers of second electrode plates 32 along the first direction X.

The dimension L3 of the first nick 313 along the first direction X is set to be less than or equal to the dimension L4 of at least one corresponding second electrode plate 32 along the first direction X, thereby reducing the precipitation of an active material caused by the excessive size of the first nick 313, and reducing the adverse effect on the performance of the electrode assembly 22.

In an embodiment of this application, the electrode assembly 22 may be formed by winding in other ways instead. For example, the electrode assembly 22 further includes a second electrode plate 32 of an opposite polarity to the first electrode plate 31. The first electrode plate 31 and the second electrode plate 32 are wound around a winding axis. Specifically, as shown in FIG. 8, the first electrode plate 31 and the second electrode plate 32 may be wound to form the electrode assembly 22, thereby reducing the need for repeated cutting of the second electrode plate 32 before winding, and in turn, speeding up the winding process.

Understandably, on the second electrode plate 32, similar to the arrangement of the first electrode plate 31, the second electrode plate 32 in this embodiment of this application may be provided with a plurality of nicks. Specifically, the second electrode plate 32 includes a plurality of second stacked sections 322 and at least one second bent section 321. The second bent section 321 is configured to connect two adjacent second stacked sections 322. The plurality of second stacked sections 322 are stacked along the first direction X, and the second electrode plate 32 is configured to be bent at the second bent section 321.

Further, the second bent section 321 includes a plurality of second nicks 323 arranged along a second direction Y. The plurality of second nicks 323 include second edge nicks located at two ends of the second electrode plate 32 along the second direction Y and a second middle nick located in a middle region of the first electrode plate 31. A length of each second edge nick along the second direction Y is greater than a length of the second middle nick along the second direction Y. Specifically, the plurality of second nicks 323 on the second bent section 321 of the second electrode plate 32 in this embodiment of this application are similar to the plurality of first nicks 313 on the first bent section 311 of the first electrode plate 31, and may be understood with reference to the relevant description of the first nicks 313, the details of which are omitted here for brevity.

In this embodiment of this application, the second bent section 321 includes a plurality of second nicks 323 arranged along the second direction Y. On the one hand, the second bent section 321 can be positioned through the plurality of second nicks 323, thereby reducing the offset of the second electrode plate 32 at the bend, and in turn, reducing the offset between different electrode plates of the electrode assembly 22. On the other hand, the plurality of second nicks 323 can also reduce the difficulty of bending, reduce the resistance during bending, and in turn, improve the processing efficiency of the electrode assembly 22. In addition, when the second bent section 321 is being bent, the resistance at the edges of the second electrode plate 32 at two ends along the second direction Y is greater than the resistance in the middle of the second electrode plate 32. Moreover, the creases at the edges of the second electrode plate 32 fluctuate more violently. Therefore, the length of the second edge nick along the second direction Y is set to be greater than the length of the second middle nick along the second direction Y, thereby reducing the resistance at the edges of the second electrode plate 32 to a greater extent, reducing fluctuations, further reducing the probability of offsetting of the second electrode plate 32 during bending, and in turn, reducing the probability of precipitation of an active material or failure of the electrode assembly 22, and improving the processing efficiency and yield rate of the electrode assembly 22.

In an embodiment of this application, among the plurality of first bent sections 311 and the at least one second bent section 321, a dimension of a nick on a bent section close to the center of the electrode assembly along a bending direction W is smaller than a dimension of a nick on a bent section far from the center of the electrode assembly along the bending direction W. Specifically, using the left half of the electrode assembly 22 shown in FIG. 8 as an example, in a radially outward direction from the center of the electrode assembly 22, the first electrode plate 31 and the second electrode plate 32 include two first bent sections 311 and one second bent section 321 in total. Moreover, the dimensions of the nicks on the three bent sections along the bending direction W are R21, R22, and R23, respectively. The dimensions of the nicks on the three bent sections along the bending direction W are set to satisfy: R21 < R22 < R23.

Specifically, for the right half of the electrode assembly 22, in a radially outward direction from the center of the electrode assembly 22, the first electrode plate 31 and the second electrode plate 32 include three first bent sections 311 and two second bent sections 321 in total. Moreover, the dimensions of the nicks on the five bent sections along the bending direction W also increase gradually along an outward radial direction from inside of the electrode assembly 22.

The arc lengths of the first bent section 311 of the first electrode plate 31 and the second bent section 321 of the second electrode plate 32 gradually increase along the outward radial direction from inside of the electrode assembly 22, that is, the bending radius gradually increases. Therefore, the dimensions of the first nick 313 and the second nick 323 along the bending direction W are also set to gradually increase along the outward radial direction from inside of the electrode assembly 22 accordingly. In this way, the nick on a bent section with a smaller arc length is smaller in size, and the nick on a bent section with a larger arc length is larger in size, thereby not only facilitating processing, but also increasing the structural strength of the electrode assembly 22 and alleviating the problem of excessively low strength at a local region of the electrode assembly 22.

Understandably, the polarity of the first electrode plate 31 may be the same as or opposite to the polarity of the second electrode plate 32 in an embodiment of this application. For example, the above embodiments of this application are primarily described by using an example in which the first electrode plate 31 is a negative electrode plate, thereby alleviating active material precipitation and the adverse effect on the performance of the electrode assembly 22. For another example, the above embodiments of this application are primarily described by using an example in which the second electrode plate 32 is a positive electrode plate, thereby alleviating active material precipitation and the adverse effect on the performance of the electrode assembly 22.

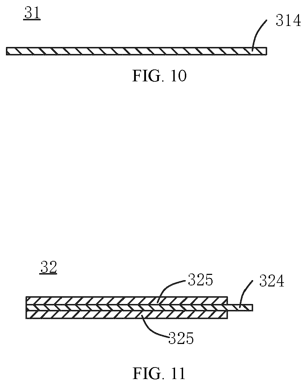

FIG. 10 shows a cross-sectional schematic view of a first electrode plate 31 according to an embodiment of this application. For example, FIG. 10 may be a cross-sectional view of the first electrode plate 31 along the A-A' direction shown in FIG. 9, and, as an example, the first electrode plate 31 is a negative electrode plate. FIG. 11 shows a cross-sectional schematic view of a second electrode plate 32 according to an embodiment of this application. The direction of the cross section is consistent with the direction shown in FIG. 10, and, as an example, the second electrode plate 32 is a positive electrode plate.

Optionally, the negative electrode plate includes a negative current collector 314. A surface of the negative current collector 314 is uncoated with a negative active material. In this way, the overall thickness of the negative electrode plate is reduced, and the resultant electrode assembly 22 is lighter and smaller in volume; or, the thickness of the positive electrode plate is increased in a case that the overall thickness of the negative electrode plate is reduced. For example, the thickness of the positive active material layer 325 on the positive electrode plate is increased, thereby increasing the energy density of the battery cell 20 containing the electrode assembly 22.

Optionally, if the surface of the negative current collector 314 is uncoated with a negative active material, the negative current collector 314 may be copper foil, or copper foil coated with conductive carbon. The material of the negative current collector is not limited herein.

As shown in FIG. 10 to FIG. 11, the positive electrode plate in an embodiment of this application may include a positive current collector 324 and a positive active material layer 325 disposed on both sides of the positive current collector 324. The material of the positive active material layer 325 in this embodiment of this application may be flexibly set according to practical needs. For example, the material of the positive active material layer 325 includes at least one of: a Prussian blue sodium-ion positive electrode material, a layered oxide sodium-ion positive electrode material, or a polyanionic sodium electrode material. The electrode assembly 22 and battery cell 20 formed by using such a positive active material layer 325 are more resistant to high temperature and reduce the probability of explosion of the battery cell 20 at high temperature.

Optionally, the electrode assembly 22 in this embodiment of this application may further include a separator 33. The separator 33 may be located between the first electrode plate 31 and the second electrode plate 32. For example, the separator 33 may be located between the positive electrode plate and the negative electrode plate so as to separate the positive electrode plate from the negative electrode plate. The material of the separator 33 in this embodiment of this application may be selected according to practical needs. For example, the material of the separator 33 may be an alumina ceramic coating and a polyvinylidene difluoride (PVDF) binder, but is not limited herein.

Therefore, the electrode assembly 22 in this embodiment of this application includes a first electrode plate 31. The first electrode plate 31 includes a plurality of first stacked sections 312 and at least one bent section 311. The plurality of first stacked sections 312 are stacked along a first direction X. The first direction X is perpendicular to the first stacked sections 312. The first bent section 311 is configured to connect two first stacked sections 312. The first electrode plate 31 can bend at the first bent section 311. The first bent section 311 includes a plurality of first nicks 313 arranged along a second direction Y. The second direction Y is an extension direction of the first bent section 311. On the one hand, the first bent section 311 can be positioned through the plurality of first nicks 313, and the offset of the first electrode plate 31 at the bend can be reduced. On the other hand, the plurality of first nicks 313 can also reduce the difficulty of bending, reduce the resistance during bending, and in turn, improve the processing efficiency of the electrode assembly 22.

In addition, the plurality of first nicks 313 include first edge nicks 3131 located at two ends of the first electrode plate 31 along the second direction Y and a first middle nick 3132 located in a middle region of the first electrode plate 31. The length of each first edge nick 3131 along the second direction Y is greater than the length of the first middle nick 3132 along the second direction Y. When the first bent section 311 is being bent, the resistance at the edges of the first electrode plate 31 at two ends along the second direction Y is greater than the resistance in the middle of the first electrode plate 31. Moreover, the creases at the edges of the first electrode plate 31 fluctuate more violently. Therefore, the length of the first edge nick 3131 along the second direction Y is set to be greater than the length of the first middle nick 3132 along the second direction Y, thereby reducing the resistance at the edges of the first electrode plate 31 to a greater extent, reducing fluctuations, further reducing the probability of offsetting of the first electrode plate 31 during bending, reducing the probability of precipitation of an active material, and improving the processing efficiency and yield rate of the electrode assembly 22.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

## Claims

1. An electrode assembly, comprising:
a first electrode plate (31), wherein
the first electrode plate (31) comprises a plurality of first stacked sections (312) and at least one first bent section (311), the plurality of first stacked sections (312) are stacked along a first direction, the first bent section (311) is configured to connect two first stacked sections (312), the first electrode plate (31) is configured to bend at the first bent section (311), and the first direction is perpendicular to the first stacked sections (312); and
the first bent section (311) comprises a plurality of first nicks (313) arranged along a second direction, the second direction is an extension direction of the first bent section (311), the plurality of first nicks (313) comprise first edge nicks (3131) located at two ends of the first electrode plate (31) along the second direction and a first middle nick (3132) located in a middle region of the first electrode plate (31), and a length of each first edge nick (3131) along the second direction is greater than a length of the first middle nick (3132) along the second direction.

2. The electrode assembly according to claim 1, wherein, along the first direction, the plurality of first nicks (313) are located in a middle of the first bent section (311).

3. The electrode assembly according to claim 1 or 2, wherein the length of the first edge nick (3131) along the second direction is greater than or equal to three times the length of the first middle nick (3132) along the second direction; and/or
the length of the first edge nick (3131) along the second direction is less than or equal to five times the length of the first middle nick (3132) along the second direction.

4. The electrode assembly according to any one of claims 1 to 3, wherein the plurality of first nicks (313) comprise a plurality of first middle nicks (3132); and
lengths of the plurality of first middle nicks (3132) along the second direction are equal, and/or intervals between the plurality of first middle nicks (3132) along the second direction are equal.

5. The electrode assembly according to any one of claims 1 to 4, wherein one end of the first electrode plate (31) along the second direction comprises a tab (222), and a length of a first edge nick (3131) close to the tab (222) along the second direction is less than a length of a first edge nick (3131) away from the tab (222) along the second direction.

6. The electrode assembly according to any one of claims 1 to 5, wherein a ratio of a distance between the first edge nick (3131) and an end of the corresponding first electrode plate (31) along the second direction to a length of the first electrode plate (31) along the second direction falls within a range of [0.008, 0.02].

7. The electrode assembly according to any one of claims 1 to 6, wherein a distance between the first edge nick (3131) and an adjacent first middle nick (3132) falls within a range of [1 mm, 10 mm].

8. The electrode assembly according to any one of claims 1 to 7, wherein the first nick (313) is a through-hole; or
the first nick (313) is a groove.

9. The electrode assembly according to any one of claims 1 to 8, wherein the first electrode plate (31) comprises a plurality of first bent sections (311) that are bent in different bending directions.

10. The electrode assembly according to claim 9, wherein the plurality of first bent sections (311) comprise two first bent sections (311) that are bent in opposite bending directions, and dimensions of the first nicks (313) on the two first bent sections (311) along the bending directions are equal.

11. The electrode assembly according to any one of claims 1 to 8, wherein the first electrode plate (31) comprises a plurality of first bent sections (311), and the plurality of first bent sections (311) are bent in a same bending direction; and
among the plurality of first bent sections (311), a dimension of a first nick (313) on a first bent section (311) close to a center of the electrode assembly along a bending direction is smaller than a dimension of a first nick (313) on a first bent section (311) far from the center of the electrode assembly along the bending direction.

12. The electrode assembly according to any one of claims 9 to 11, wherein the electrode assembly further comprises:
a plurality of second electrode plates (32) of an opposite polarity to the first electrode plate (31), and the plurality of second electrode plates (32) and the plurality of first stacked sections (312) are alternately stacked along the first direction.

13. The electrode assembly according to claim 12, wherein, along a third direction, the first bent section (311) corresponds to at least one second electrode plate (32); and
along the first direction, a dimension of each of the first nicks (313) is less than or equal to a dimension of at least one corresponding second electrode plate (32), and the third direction is perpendicular to the first direction and the second direction.

14. The electrode assembly according to any one of claims 1 to 8 or claim 11, wherein the electrode assembly further comprises:
a second electrode plate (32) of an opposite polarity to the first electrode plate (31), and the first electrode plate (31) and the second electrode plate (32) are wound around a winding axis.

15. The electrode assembly according to claim 14, wherein the second electrode plate (32) comprises a plurality of second stacked sections (322) and at least one second bent section (321), and the second bent section (321) is configured to connect two adjacent second stacked sections (322); and
the second bent section (321) comprises a plurality of second nicks (323) arranged along a second direction, the plurality of second nicks (323) comprise second edge nicks located at two ends of the second electrode plate (32) along the second direction and a second middle nick located in a middle region of the first electrode plate (31), and a length of each second edge nick along the second direction is greater than a length of the second middle nick along the second direction.

16. The electrode assembly according to claim 15, wherein, among the plurality of first bent sections (311) and the at least one second bent section (321), a dimension of a nick on a bent section close to a center of the electrode assembly along a bending direction is smaller than a dimension of a nick on a bent section far from the center of the electrode assembly along the bending direction.

17. The electrode assembly according to any one of claims 12 to 16, wherein the second electrode plate (32) is a positive electrode plate.

18. The electrode assembly according to claim 17, wherein the positive electrode plate comprises a positive active material layer (325), and a material in the positive active material layer (325) comprises at least one of: a Prussian blue sodium-ion positive electrode material, a layered oxide sodium-ion positive electrode material, or a polyanionic sodium electrode material.

19. The electrode assembly according to any one of claims 1 to 18, wherein the first electrode plate (31) is a negative electrode plate.

20. The electrode assembly according to claim 19, wherein the negative electrode plate comprises a negative current collector (314), and a surface of the negative current collector (314) is uncoated with a negative active material.

21. A battery cell, comprising:
the electrode assembly according to any one of claims 1 to 20.

22. A battery, comprising:
a plurality of battery cells, wherein each battery cell comprises the electrode assembly according to any one of claims 1 to 20.

23. An electrical device, comprising:
a battery, wherein the battery comprises the electrode assembly according to any one of claims 1 to 20, and the battery is configured to provide electrical energy for the electrical device.
